Europäisches Patentamt

European Patent Office

Office européen des brevets

(19)

(11) **EP 1 003 186 B1**

(12) **EUROPÄISCHE PATENTSCHRIFT**

(45) Veröffentlichungstag und Bekanntmachung des Hinweises auf die Patenterteilung:
**17.09.2003 Patentblatt 2003/38**

(51) Int Cl.7: **H01H 9/16**, B60R 16/02

(21) Anmeldenummer: **99119262.6**

(22) Anmeldetag: **28.09.1999**

(54) **Verfahren, Wählschalter und Wähleinrichtung zur sicheren Positionserkennung einer von dem Wählschalter eingenommenen Position**

Method, selector switch and selecting device for sure position recognition of a position taken by the selector switch

Procédé, sélecteur et dispositif de sélection pour une reconnaissance fiable de la position prise par le sélecteur

(84) Benannte Vertragsstaaten:
**DE ES FR GB IT SE**

(30) Priorität: **12.11.1998 DE 19852227**

(43) Veröffentlichungstag der Anmeldung:
**24.05.2000 Patentblatt 2000/21**

(73) Patentinhaber: **Bayerische Motoren Werke Aktiengesellschaft 80809 München (DE)**

(72) Erfinder: **Kreppold, Bernhard 80637 München (DE)**

(56) Entgegenhaltungen:
**EP-A- 0 612 088       US-A- 5 049 879
US-A- 5 233 228**

**Beschreibung**

Die Erfindung betrifft ein Verfahren, einen Wählschalter und eine Wähleinrichtung, insbesondere bei einem Fahrzeug, zur sicheren Positionserkennung eines in zumindest zwei Positionen betätigbaren Wählschalters. Siehe DE-C-4 135 362.

Wählschalter sind in mannigfacher Weise in jedem Einsatzgebiet bekannt. Ihre Betätigung kann eine mechanische, hydraulische, pneumatische oder elektrische Reaktion auslösen. Vorliegend geht es um Wählschalter, die in zumindest zwei Positionen betätigbar sind und ein der jeweiligen Position zugeordnetes elektrisches Signal abgeben. Die Zuordnung (auch Codierung) der Betätigungsposition zu der entsprechenden Reaktion kann analoger oder digitaler Natur sein. Bei einer digitalen Codierung wird jeder Wählschalterposition ein bestimmtes, beispielsweise durch die Betätigung von Schaltelementen erzeugtes Bitmuster zugeordnet.

Es sind bereits Wählschalter bekannt, bei denen in jeder Wählschalterposition ein bestimmter elektrischer Schalter, beispielsweise ein Endlagenschalter, betätigt wird, dessen Signal einem Steuergerät die Wählschalterposition angibt.

Im breiten Einsatzbereich der Wählschalter gibt es auch solche, die besonders sicherheitsrelevante Informationen abgeben. Bei diesen Wählschaltern muß auf eine besondere Eigensicherheit und Verfügbarkeit geachtet werden. Als Beispiel sei hier ein Getriebewählschalter bei einem Kraftfahrzeug mit elektronisch schaltbarem Getriebe erwähnt. Mehrere Schaltstellungen müssen sicher und verfügbar erkannt und an ein elektronisches Getriebesteuergerät weitergegeben werden.

Aufgabe der vorliegenden Erfindung ist es, ein Verfahren, einen Wählschalter und eine Wähleinrichtung anzugeben, die eine sichere Positionserkennung einer von dem Wählschalter eingenommenen Position erlauben.

Diese Aufgabe wird durch die in den Ansprüchen 1, 4 und 6 angegebenen Merkmale für ein Verfahren, einen Wählschalter bzw. eine Wähleinrichtung gelöst.

Grundsätzlich wird die geforderte Eigensicherheit durch die Verwendung eines redundanten und damit eine Fehlererkennung ermöglichenden Codes erreicht, wobei einer Wählschalterposition ein-eindeutig ein bestimmtes Codewort zugeordnet ist. Durch eine Auswertung der redundanten Informationen im Code kann auf eine fehlerhafte Positionserkennung geschlossen werden.

Solche Verfahren sind zum Teil bereits aus anderen Bereichen - beispielsweise bei der Sicherstellung einer richtigen Datenübertragung - bekannt. Die Höhe der Redundanz und damit des verwendeten Codes richtet sich nach den Anforderungen an die Eigensicherheit des Wählschalters. Insgesamt kann unter Verwendung eines redundanten Digitalcodes in vorteilhafter Weise ein Wählschalter mit beliebig hoher Eigensicherheit realisiert werden.

Erfindungswesentlich ist ferner, daß die durch die Codiervorschrift gültigen Codewörter durch eine konstruktive Umsetzung auf eine geometrische Schalteranordnung derart abgebildet werden, daß nicht nur ein-eindeutig gültiges Codewort aus dem verwendeten Coderaum zugeordnet wird, sondern, daß dieses Codewort die Wählschalterstellung auch noch zumindest doppelt beinhaltet. Mittels einer Decodierung des Codewortes mit einem code-konformen Algorithmus kommt die in dem Codewort steckende Redundanz bei der Überprüfung der Wählschalterposition zum Tragen.

Die alternativen Ansprüche 1 und 2 stellen zwei verschiedene Lösungsvarianten dar. Gemäß Anspruch 1 werden die zumindest zwei redundant im Codewort ermittelten Wählschalterpositionen ermittelt und miteinander verglichen. Gemäß Anspruch 2 wird aus einer Wählschalterposition mittels einer bekannten Abbildungsvorschrift aus einer Wählschalterposition die redundante Wählschalterposition theoretisch ermittelt und mit der tatsächlich vorliegenden zweiten Wählschalterposition verglichen.

Ein besonderes Ausführungsbeispiel ergibt sich durch die Verwendung des Hamming-Codes. Darauf stellen die Verfahrensansprüche ab Anspruch 3 ab. Die Verwendung des Hamming-Codes soll jedoch nicht beschränkend verstanden werden.

Gemäß Anspruch 3 ist jeder Wählschalterposition ein aus einem Daten- und einem Prüfteil zusammengesetztes Codewort zugeordnet. Jedes Codewort in jeder Wählschalterposition wird durch eine der Anzahl der Bits des Codeworts entsprechenden Anzahl von Schaltern erzeugt, wobei bereits der Datenteil eine eindeutige Wählschalterposition angibt. Der Prüfteil eines jeden Codeworts ergibt sich aus einer definierten Abbildungsregel aus dem Datenteil. Wird dann der tatsächlich von den Schaltern erzeugte Prüfteil mit dem aus dem Datenteil gemäß der definierten Abbildungsregel berechneten Prüfteil verglichen, so kann auf eine korrekte oder fehlerhafte Positionserkennung beim Wählschalter geschlossen werden.

Gemäß einem erweiterten Hamming-Code kann beim Codewort ein erweiterter Prüfteil vorgesehen sein, dessen Informationen sich aus einer definierten Kombination der Daten und Prüfteile ergibt.

Mit dem erweiterten Hamming-Code ist eine Zweifach-Fehlererkennung möglich. Zwar kann eine Zweifach-Fehlerkorrektur nicht durchgeführt werden, doch können der Fahrer über das Vorliegen eines entsprechenden Fehlers informiert und die entsprechenden Vorsichtsmaßnahmen getroffen werden.

Mit dem normalen Hamming-Code ist eine Einfachfehlererkennung möglich, wobei bei einer entsprechenden Definition der Abbildungsregel (z. B. eine EXOR-Verknüpfung der Datenteilinformationen) nicht nur das Vorliegen eines einfachen Fehlers sondern auch seine Position detektierbar sind.

Je nach gewählter Hamming-Distanz ($d_{min}$ = 3; $d_{min}$ = 4) finden bei jedem Wechsel der Schaltposition des Wählschalters eine bestimmte Anzahl von Schaltvorgängen statt. Dazu müssen die Codewörter aus der Menge der möglichen Codewörter (Codewort-Raum) entsprechend ausgewählt werden. Dieser Effekt läßt sich zum Ermitteln von Asynchronitäten beim Schaltvorgang ausnutzen. Bei Wahl einer Hamming-Distanz von $d_{min}$ = 4 kann bereits nach drei Bit-Wechseln eindeutig eine neue Schaltposition festgelegt werden. Dabei kann man so vorgehen, daß ein Codewort erst dann betrachtet wird, wenn drei Bit-Wechsel vollzogen sind. Man kann für jeden Stellungswechsel boolsche Gleichungen aufstellen und die veränderten Bits mit einer Wahrheitstabelle der Schaltzustände vergleichen. Bei einer entsprechenden Übereinstimmung ist eine richtige Schalterstellung gefunden. Mit der letztgenannten Maßnahme kann man darüber hinaus ein Fehlergewicht bis zur vierten Ordnung korrigieren. Nachteilig hierbei ist jedoch, daß im ersten Schritt keine Lokalisierung der defekten Signalpfade möglich ist.

Die beiden Prüfteile, also der detektierte und der berechnete, werden über eine EXOR-Verknüpfung, ein sog. Syndrom, gebildet. Eine hinterlegte Syndromtabelle kann bei der Detektion eines Einfachfehlers Aufschluß über die Position des Fehlers liefern. Ferner kann eine hinterlegte Tabelle bei einer Verwendung eines Codeworts mit erweitertem Prüfteil unter Berücksichtigung des erweiterten Prüfteils beim Vergleich der Prüfteile, insbesondere des Syndroms, das Vorliegen eines Zweifachfehlers schnell und sicher angeben.

Der gemäß Anspruch 12 ausgebildete Wählschalter ist derart konstruiert, daß eine Anzahl von Schaltern das Codewort generieren. Die Schalter sind dabei den Daten- oder Prüfteilen (auch erweiterter Prüfteil) zugeordnet. Es muß darauf geachtet werden, daß die Schalter für die Prüfteile derart angeordnet und verschaltet sind, daß sich bei jeder Wählschalterposition die Information jedes Prüfteils in Übereinstimmung mit der definierten Abbildungsregel ergibt. Als Schalter können Schleifkontakte, Hallsensoren oder andere Schalter verwendet werden. Besonders vorteilhaft hat sich die Verwendung von Hallsensoren herausgestellt. Dabei können Magnete für die jeweils einem bestimmten Schalter zugeordneten Hallsensoren entsprechend einer gewünschten Schaltkulisse und entsprechend einer Zuordnung Code-Wort-Information/Wählschalterstellung angeordnet werden.

Alle den entsprechenden Schaltern zugeordneten Hallsensoren können in einer bestimmten Anordnung zusammengefaßt werden, gegenüber der sich ein jeweils passendes Magnetarray befindet. In diesem Zusammenhang wird auf die nachfolgenden Ausführungsbeispiele hingewiesen.

Als Wählschalter kann ein Kipp-Wipp- oder Tastenschalter oder ein solcher Hebel oder irgendein anderer Schalter verwendet werden.

Gemäß Anspruch 22 ist eine Wähleinrichtung angegeben, die einen Wählschalter sowie eine Steuereinrichtung umfaßt. Der Wählschalter ist nach einem der Ansprüche 14 bis 21 ausgebildet. Die Steuereinrichtung ist zur Aufnahme und Auswertung der übermittelten Codewörter geeignet und gibt ein von einem Wählschalter gemeldetes und überprüftes Signal an eine zu steuernde Einheit ab.

Insgesamt ist mit der vorliegenden Erfindung die Möglichkeit gegeben, eine aus mehreren Schaltpositionen ausgewählte Wählschalterstellung sicher zu erkennen und Fehler - zumindest in bestimmter Ordnung - zu bestimmen und möglicherweise zu beheben. Bei der Verwendung von Wählschaltern, an die besonders hohe Anforderungen bezüglich der Eigensicherheit und Verfügbarkeit gestellt sind, bietet die vorliegende Erfindung eine gute Möglichkeit zur Realisierung von solchen redundanten Systemen.

Nachfolgend werden zwei Ausführungsbeispiele der vorliegenden Erfindung angegeben, die anhand der beiliegenden Zeichnungen näher erläutert werden.

Die Figuren zeigen in

Fig. 1a   eine einfache Skizze für fünf mögliche Schalterstellungen eines Wählschalters bei einer kreuzförmigen Schaltkulisse,

Fig. 1b   eine zugeordnete Magnetgeometrie für sieben jeweils einem Schalter entsprechenden Hallsensoren,

Fig. 2a   eine einfache Skizze von fünf Schalterstellungen gemäß einer linearen Schaltkulisse,

Fig. 2b   die zugehörige Magnetgeometrie bei der Verwendung von Hallsensoren für sieben Schalter,

Fig. 3   eine Magnetfeldarray mit zugehöriger Hallsensoren-Anordnung für das Ausführungsbeispiel gemäß Figur 1 und 2.

Tabelle 1 eine Codetabelle gemäß einem normalen Hamming-Code,

Tabelle 2 eine Syndromtabelle und

Tabelle 3 eine Codetabelle gemäß dem erweiterten Hamming-Code.

Bei den beiden hier erläuterten Ausführungsbeispielen wird das erfindungsgemäße Verfahren an einer kreuzförmigen und einer linearen Schaltkulisse vorgestellt. Ein Wählhebel kann dabei jeweils in fünf Schalterstellungen positioniert werden, wobei eine jeweils mittige Schalterstellung eine Neutralposition darstellt, in die der als Tasthebel ausgeführte Wählschalter nach jeder Betätigung automatisch zurückgeführt wird.

Natürlich sind auch andere Schaltkulissen-Geometrien und Wählhebelausführungen, beispielsweise solche mit Raststellungen, ohne weiteres denkbar.

Nicht dargestellt ist, daß ein in jeder Schalterstellung vom Wählhebel erzeugtes Codewort an eine Steuereinrichtung weitergeleitet wird, die zur Verarbeitung dieses Codeworts gemäß dem nachfolgend beschriebenen Verfahren ausgebildet ist und wiederum eine zu steuernde Einheit (z.B. Getriebe eines Fahrzeugs) entsprechend der detektierten Wählhebelposition ansteuert

Bei dem vorliegenden Verfahren wird ein Codewort C gewählt, das sich aus drei Datenbits $D_0$, $D_1$ und $D_2$ sowie drei Prüfbits $P_0$, $P_1$ und $P_2$ und einem erweiterten Prüfbit $P_G$ zusammensetzt.

Zunächst wird das vorliegend ausgewählte Verfahren an einem Codewort C ohne das erweiterte Prüfbit $P_G$ dargelegt. Die Datenbits $D_0$ bis $D_2$ definieren eine Wählhebelstellung bereits eindeutig. Jedes einzelne Bit des Codeworts wird von einem jeweils zugeordneten Schalter des Wählhebels generiert.

Darüber hinaus besteht zwischen den Datenbits und den Prüfbits eine Abbildungsregel gemäß folgender Vorschrift:

$$\vec{P} \approx \begin{pmatrix} P_0 \\ P_1 \\ P_2 \end{pmatrix},$$

*mit*

$P_0 = D_0 \oplus D_1$
$P_1 = D_0 \oplus D_2$
$P_2 = D_1 \oplus D_2$

Die Verknüpfung der einzelnen Datenteile erfolgt ($\oplus$) über eine EXOR-Verknüpfung.

Insofern ergibt sich eine Codetabelle, wie sie in der Tabelle 1 dargestellt ist, wobei in dieser Tabelle acht Wählhebelstellungen vorgesehen sind. Das von den Schaltern des Wählhebels generierte Codewort wird an die (nicht dargestellte) Steuereinrichtung geschickt, welche entsprechend der vorgenannten Abbildungsregel einen Prüfteil generiert, und zwar nach der folgenden Vorschrift:

$$P'_0 = D_0 \oplus D_1$$

$$P'_1 = D_0 \oplus D_2$$

$$P'_2 = D_1 \oplus D_2$$

In der Steuereinrichtung werden dann der vom Wählhebel aus den Schalterstellungen gelieferte Prüfteil und der im Steuergerät berechnete Prüfteil über eine EXOR-Verknüpfung miteinander verglichen. Es wird das Syndrom F in folgender Weise ermittelt:

$$\vec{F} = \vec{P} \oplus \vec{P}'$$

Unter Berücksichtigung eine Kombination des Datenwortes und des im Steuergerät ermittelten Syndroms F läßt sich auf einfache Weise eine Fehlererkennung und -korrektur bewerkstelligen. Dabei sind folgende Fälle zu unterscheiden:

1. Ist das Sydrom F = 0 und entspricht das vom Wählhebel übermittelte Datenwort einer gültigen Bit-Kombination, d. h. einer gültigen Schalterstellung, so liegt eine fehlerfreie Sensierung vor.

2. Ist jedoch das Syndrom Element aus der Menge (1, 0, 0), (0, 1, 0) oder (0, 0, 1) und der Datenteil ein gültiger Datenteil, so liegt ein Einfachfehler im Prüfwort vor. Diese Sensierung des Datenteils D und damit der Schaltposition kann als fehlerfrei angenommen werden.

3. Ist das Syndrom F jedoch Element der in Tabelle 2 angegebenen Syndromtabelle, so liegt ein Einfachfehler im Datenwort D vor, d. h. eine der im Datenteil übermittelten Informationen (Bits) ist fehlerhaft. Durch einen Vergleich des ermittelten Syndroms mit der Syndromtabelle kann man ersehen, ob das Datenbit $D_0$, $D_1$ oder $D_2$ fehlerhaft ist.

Von Vorteil ist die Verwendung eines Codeworts mit erweitertem Prüfteil. Damit kann eine Hamming-Distanz von $d_{min}$ = 4 erreicht werden. Es ist also eine Zweifachfehlererkennung möglich. Dabei wird dem Codewort ein Paritätsbit $p_{ges}$ hinzugefügt:

$$p_{ges} = D_0 \oplus D_1 \oplus D_2 \oplus P_0 \oplus P_1 \oplus P_2$$

Damit ergibt sich eine Codetabelle, wie sie in Tabelle 3 dargestellt ist. Durch eine getrennte Auswertung des Prüfwortes und des Paritätsbits in-der Steuereinrichtung kann ein Zweifachfehler gemäß folgender Tabelle erkannt werden.

| Anzahl der Fehler | Syndrom | Paritätskontrolle |
| --- | --- | --- |
| 0 | 000 | 0 |
| 1 | xxx | 1 |
| 2 | xxx ≠ 0 | 0 |

Ein Zweifachfehler ist somit dadurch charakterisiert, daß für das Syndrom F ≠ 0 gilt und die Paritätskontrolle für das gesamte Codewort ebenfalls 0 ergibt. In diesem Fall liegt ein nicht korrigierbares Codewort vor. Die Einfachfehlerkorrektur wird gesperrt. Eine Zweifachfehlerkorrektur ist nicht möglich. In diesem Fall müssen die erforderlichen Maßnahmen ergriffen und der Fahrzeugbediener informiert werden.

Zur Lösung des Problems von asynchronen Schaltzeitpunkten, d. h. bei einer Zwischenstellung des Schalters zwischen zwei eindeutigen Schaltpositionen, ist es hilfreich, eine Hamming-Distanz von 4 ($d_{min}$ = 4) zu wählen und die Codewörter den entsprechenden Schaltpositionen derart zuzuordnen, daß bei jedem Schaltvorgang ein Wechsel von vier Bits erfolgt. Bereits nach drei Bitwechseln ist die neue Schaltposition eindeutig festgelegt. Insgesamt kann mit dieser Vorgehensweise ein Fehlergewicht von 4 korrigiert werden, wobei jedoch im ersten Schritt keine Lokalisierung der defekten Signalpfade möglich ist. Außerdem muß von einem gültigen Signalzustand ausgegangen werden.

Falls nur 2 Bits gekippt sind, sind genau zwei Signalpfade der sich ändernden Bits gestört. Dies kann man nicht direkt diagnostizieren. Es könnte ja auch nur der Schalter nicht ganz durchgedrückt worden sein. Erst durch eine Verknüpfung nach mehreren Schaltwechseln kann man dies feststellen.

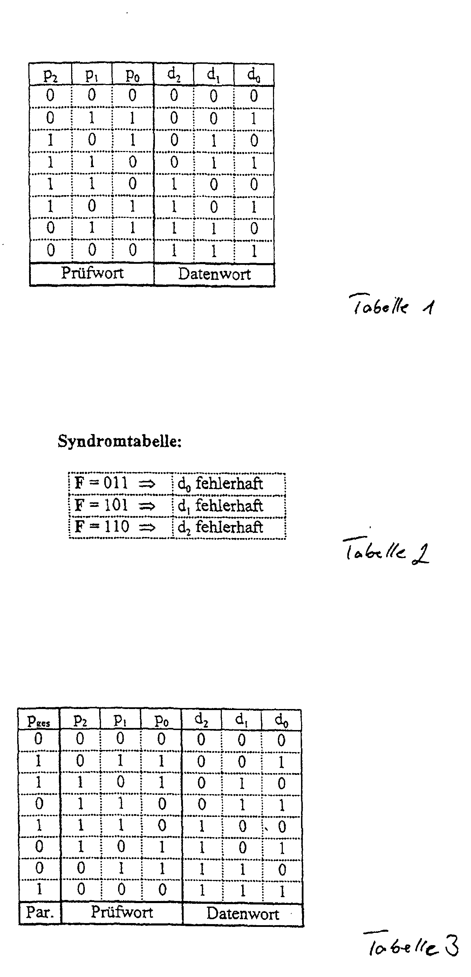

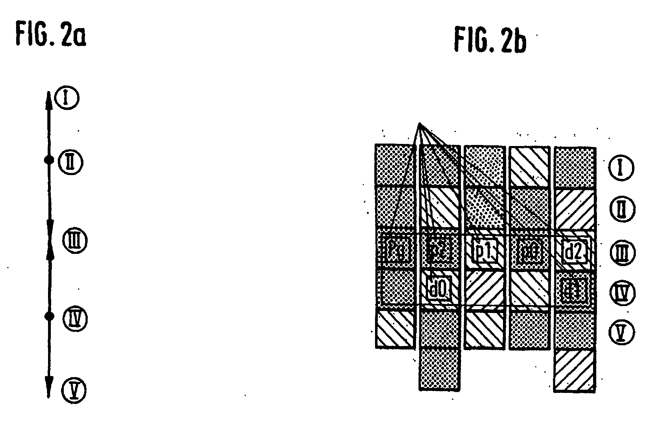

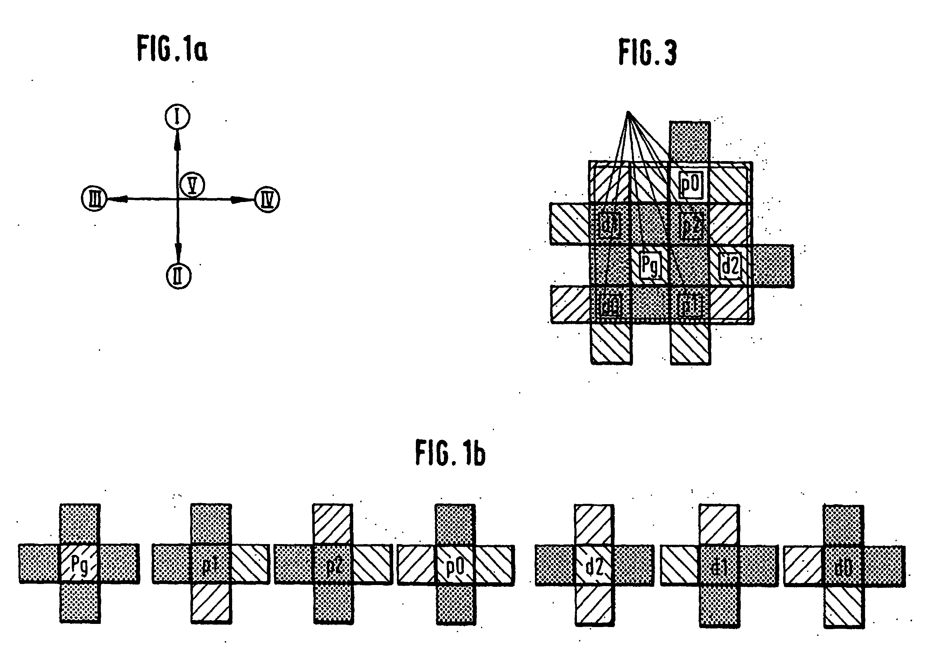

In den Fig. 1a, 1b und 3 ist eine Ausführungsform für die Geometrie der Schalter bei einer Kreuzkulisse für einen Gangwählhebel angegeben, der in fünf Positionen betätigt werden kann, nämlich links, rechts, vorne, hinten und neutral (mittige Stellung). Entsprechend dieser Schaltkulisse und Betätigungsmögtichkeit des Wählhebels werden aus dem zur Verfügung stehenden Coderaum fünf Codewörter ausgewählt. Die Auswahl dieser Codewörter wird im Hinblick auf weitere Randbedingungen wie z.B. Bauraum so getroffen, daß sich möglichst viele Magnetbereiche der einzelnen Bits logisch überschneiden und somit zusammenfallen können. Vorliegend sind 7 Hallsensoren $d_0$, $d_1$, $d_2$, $p_0$, $p_1$, $p_2$, $p_G$ angeordnet, wobei für jeden einem Schalter zugeordneten Hallsensor ein kreuzförmiges Magnetarray mit einer bestimmten Magnetbelegung (Nord-Süd) wie in Figur 1b dargestellt vorgegeben ist. Dabei entsprechen die Hallsensoren $d_0$, $d_1$, $d_2$, $p_0$, $p_1$, $P_2$ und $P_G$ den entsprechenden Datenbits aus Tabelle 3. Der Südpol ist jeweils mit Schraffur markiert dargestellt und entspricht einer logischen 0. Der magnetische Nordpol ist jeweils ohne Schraffur dargestellt und entspricht einer logischen 1, wenn er über dem Hallsensor angeordnet ist.

Da die vorliegenden sieben Schalter, also die Hallsensoren und die entsprechenden Magnetfelder gleichzeitig realisiert sein müssen, wird eine Anordnung der Hallsensoren $d_0$ bis $d_2$, $p_0$ bis $p_2$ und $p_G$ wie in Fig. 3 dargestellt gewählt. Das dabei entstehende gesamte Magnetarray gemäß Figur 3 entspricht einer flächenoptimierten Überlagerung der in Fig. 1b dargestellten Arrays und steht jeweils in Bezug zu den jeweiligen Hallsensoren. Das Magnetarray kann beispielsweise an dem Wählhebel angeordnet sein und überfährt bei einem entsprechend der Schaltkulisse möglichen Schaltvorgang die Hallsensoren. Je nach Schaltstellung resultiert eine in Tabelle 3 angegebene Codierung.

In analoger Weise ist in den Fig. 2a und 2b ein Magnetarray und Hallsensoren für eine lineare Schaltkulisse mit fünf Schalterstellungen dargestellt. Durch entsprechende Bewegung, beispielsweise Antippen eines Tast-Kipp-Schalters aus der Normalposition (Position III) in eine der übrigen Positionen I, II, IV und V kann eine zugeordnete Codefolge gemäß der Magnetarray- und Schalteranordnung erzeugt werden.

Natürlich können auch andere Schalter, andere Schaltanordnungen verwendet werden. im vorliegenden Fall ist die Schaltgeometrie für einen Gangwählhebel dargelegt worden, der fünf Fahrtbereichspositionen (R, N, neutral, N und D) besitzt.

**Patentansprüche**

1. Verfahren zur sicheren Positionserkennung eines in zumindest zwei Positionen betätigbaren Wählschalters, insbesondere zum Einsatz bei einem Fahrzeug, bei dem

   a) jeder Wählschalterposition ein aus zumindest zwei Bits zusammengesetztes Codewort zugeordnet ist,

   b) das Codewort durch eine der Anzahl der Bits des Codeworts entsprechende Anzahl von Schaltern erzeugt wird,

   c) eine Codierung verwendet wird, wodurch die einem Codewort zugeordnete Wählschalterposition im Codewort redundant vorhanden ist, derart dass

   d) jedes Codewort aus einem Daten- und einem Prüfteil besteht, wobei bereits der Datenteil eine eindeutige Wählschalterposition angibt,

   e) bei jedem Codewort der Prüfteil entsprechend einer definierten Abbildungsregel aus dem Datenteil festgelegt ist,

   f) der von den Schaltern erzeugte Prüfteil mit dem aufgrund der Abbildungsregel aus dem Datenteil gebildeten Prüfteil verglichen wird und

   g) aus dem Vergleich der beiden Prüfteile auf eine korrekte oder fehlerhafte Positionserkennung des Wählschalters geschlossen wird, **dadurch gekennzeichnet, dass**

   i) als Schalter magnetische Schalter, insbesondere Hallsensoren, verwendet werden,

   ii) für jeden Schalter Magnete der Hallsensoren entsprechend einer gewünschten Schaltkulisse und entsprechend einer Zuordnung Codewortinformation - Wählschalterstellung angeordnet werden,

   iii) alle Magnete der Hallsensoren in einem passenden Magnetarray angeordnet sind,

   iv) wobei die Auswahl der Codewörter so getroffen wird, dass sich möglichst viele Magnetbereiche der einzelnen Bits logisch überschneiden und somit zusammenfallen.

2. Verfahren nach Anspruch 1, **dadurch gekennzeichnet, dass** bei jedem Codewort ein erweiterter Prüfteil vorgesehen ist, dessen Information sich aus einer definierten Kombination der Daten- und Prüfteile ergibt.

3. Verfahren nach Anspruch 2, **dadurch gekennzeichnet, dass** der erweiterte Prüfteil 1 Bit umfasst.

4. Wähtschalter für ein Kraftfahrzeug,

   a) bei dem die Wählschalterpositionen mittels einer vorgegebenen Anzahl von Schaltern elektrisch detektierbar sind, und die Schalter eine einer jeweiligen Wählschalterposition zugeordnete und zu einem jeweils zugeordneten Codewort zusammengefasste Information abgeben, wobei die Codewörter die Wählhebelposition in der Weise redundant enthalten,

   b) dass jedes Codewort aus einem Daten- und Prüfteil besteht, bereits aus dem Datenteil die Wählschalterposition erkennbar ist und die Schalter für den Prüfteil derart eingerichtet sind, dass sich bei jeder Wählschalterposition der Prüfteil in Übereinstimmung mit einer definierten Abbildungsregel aus dem Datenteil ergibt, **dadurch gekennzeichnet**.

   i) dass als Schalter magnetische Schalter, insbesondere Hallsensoren, verwendet werden,

   ii) dass für jeden Schalter Magnete der Hallsensoren entsprechend einer gewünschten Schaltkulisse und entsprechend einer Zuordnung Codewortinformation - Wählschalterstellung angeordnet werden,

   iii) dass alle Magnete der Hallsensoren in einem passenden Magnetarray angeordnet sind,

   iv) wobei die Auswahl der Codewörter so getroffen werden, dass sich möglichst viele Magnetbereiche der einzelnen Bits logisch überschneiden und somit zusammenfallen können.

5. Wählschalter nach Anspruch 4, **dadurch gekennzeichnet, dass** der Wählschalter als Kipp-, Wipp- oder Tastschalter oder -hebel ausgeführt ist.

6. Wähleinrichtung, insbesondere für ein Fahrzeug, mit einem Wählschalter gemäß einem der Ansprüche 4 oder 5 und einer Steuereinrichtung, wobei der Wählschalter das Codewort an die Steuereinrichtung abgibt, die Steuereinrichtung zur Durchführung des Verfahrens nach einem der Ansprüche 1 bis 3 ausgebildet ist und entsprechend der vom Wählschalter gemeldeten und überprüften Wählschalterposition ein entsprechendes Signal an eine zu steuernde Einheit abgibt.

**Claims**

1. A method of reliable position recognition of a selector switch movable into at least two positions, particularly for use in a motor vehicle, wherein

   a) each selector switch position is associated with a code word made up of at least two bits,

   b) the code word is generated by a number of switches equal to the number of the bits in the code word,

   c) a coding is used in which the selector switch position associated with a code word is present therein in redundant form, so that

   d) each code word comprises a data part and a test part, wherein the data part already indicates an unambiguous selector switch position,

   e) in each code word the test part is determined from the data part in accordance with a defined mapping rule,

   f) the test part generated by the switches is compared with the test part formed from the data part in accordance with the mapping rule and

   g) a comparison between the two test parts indicates that the recognition of the position of the selector switch is correct or faulty,

   **characterised in that**

   i) the switches are magnetic switches, especially Hall sensors,

   ii) for each switch, magnets in the Hall sensors are disposed in accordance with a required gear shifting gate and in accordance with a correlation between code word information and selector switch position,

   iii) all magnets in the Hall sensors are disposed in a suitable magnet array and

   iv) the code words are selected so that the maximum number of magnetic regions of the individual bits logically overlap and consequently coincide.

2. A method according to claim 1, **characterised in that** an extended test part is provided in each code word and its information results from a defined combination of the data parts and test parts.

3. A method according to claim 2, **characterised in that** the extended test part comprises one bit.

4. A selector switch for a motor vehicle,

   a) wherein the selector switch positions are electrically detectable by a set number of switches, and the switches deliver information associated with each selector switch position and combined in a respective associated code word, the code words containing the shift lever position in redundant form,

   b) each code word consists of a data part and a test part, the selector switch position can already be recognised from the data part, and the switches for the test part are designed so that at each selector switch position the test part is obtained from the data part in accordance with a defined mapping rule,

   **characterised in that**

i) the switches are magnetic switches, especially Hall sensors,

ii) for each switch, magnets in the Hall sensors are disposed in accordance with a required gear shifting gate and in accordance with a correlation between code word information and selector switch position,

iii) all magnets in the Hall sensors are disposed in a suitable magnet array and

iv) the code words are selected so that the maximum number of magnetic regions of the individual bits logically can overlap and consequently coincide.

**5.** A selector switch according to claim 4, **characterised in that** the switch is a toggle, rocker or push-button switch or lever.

**6.** A selecting device, especially for a vehicle, comprising a control device and a selector switch according to claim 4 or 5, wherein the selector switch delivers the code word to the control device, and the control device is constructed so as to work the method according to any of claims 1 to 3 and delivers a signal to a unit to be controlled in accordance with the selector switch position reported by the selector switch and checked.

## Revendications

**1.** Procédé pour la détection sûre de position d'un commutateur sélecteur pouvant être actionné en au moins deux positions, en particulier pour l'utilisation sur un véhicule, dans lequel

a) un mot de code composé d'au moins deux bits est associé à chaque position du commutateur sélecteur,
b) le mot de code est produit par un nombre d'actionneurs correspondant au nombre de bits du mot de code,
c) un codage est utilisé, grâce auquel la position du commutateur sélecteur associée à un mot de code est présente de manière redondante dans le mot de code,
d) chaque mot de code est constitué d'une partie données et d'une partie vérification, la partie données fournissant déjà une position univoque du commutateur sélecteur,
e) pour chaque mot de code, la partie vérification est fixée à partir de la partie données selon une règle définie de représentation,
f) la partie vérification produite par les actionneurs est comparée avec la partie vérification formée à partir de la partie données en raison de la règle de représentation et
g) la comparaison des deux parties vérification permet de conclure à une détection correcte ou défectueuse de position du commutateur sélecteur,

**caractérisé en ce que**

i. des actionneurs magnétiques, en particulier sondes de Hall, sont utilisés comme actionneurs,
ii. pour chaque actionneur, des aimants des sondes de Hall sont disposés selon une coulisse de commutation désirée et selon une association information du mot de code - position du commutateur sélecteur,
iii. tous les aimants des sondes de Hall sont disposés dans un agencement adéquat d'aimants,
iv. le choix des mots de code est effectué de manière que des domaines magnétiques aussi nombreux que possible des bits individuels se recoupent logiquement et tombent donc ainsi ensemble.

**2.** Procédé selon la revendication 1,
**caractérisé en ce qu'**
il est prévu, pour chaque mot de code, une partie vérification élargie dont l'information résulte d'une combinaison définie des parties données et vérification.

**3.** Procédé selon la revendication 2,
**caractérisé en ce que**
la partie vérification élargie comprend 1 bit.

**4.** Commutateur sélecteur pour un véhicule automobile,

a) dans lequel les positions du commutateur sélecteur sont détectables électriquement au moyen d'un nombre prédéterminé d'actionneurs et les actionneurs donnent une information associée à une position respective du commutateur sélecteur et groupée en un mot de code respectivement associé, les mots de code contenant la position du levier de sélection de manière redondante,

b) de façon que chaque mot de code est constitué d'une partie données et d'une partie vérification, la position du commutateur sélecteur est détectable déjà à partir de la partie données et les actionneurs sont agencés, pour la partie vérification, de manière que, à chaque position du commutateur sélecteur, la partie vérification provienne de la partie données en conformité avec une règle définie de représentation,

**caractérisé en ce que**

i. des actionneurs magnétiques, en particulier sondes de Hall, sont utilisés comme actionneurs,

ii. pour chaque actionneur, des aimants des sondes de Hall sont disposés selon une coulisse de commutation désirée et selon une association information du mot de code - position du commutateur sélecteur,

iii. tous les aimants des sondes de Hall sont disposés dans un agencement adéquat d'aimants,

iv. le choix des mots de code est effectué de manière que des domaines magnétiques aussi nombreux que possible des bits individuels se recoupent logiquement et tombent donc ainsi ensemble.

5. Commutateur sélecteur selon la revendication 4,
**caractérisé en ce que**
le commutateur sélecteur est réalisé en tant qu'interrupteur basculant ou commutateur à touches ou levier.

6. Dispositif de sélection, en particulier pour un véhicule, comportant un commutateur sélecteur selon l'une des revendications 4 ou 5 et une unité de commande, dans lequel le commutateur sélecteur envoie le mot de code au dispositif de commande, le dispositif de commande est conçu pour la réalisation du procédé selon l'une des revendications 1 à 3 et, en fonction de la position du commutateur sélecteur émise et vérifiée par le commutateur sélecteur, envoie un signal correspondant à une unité à commander.

| $p_2$ | $p_1$ | $p_0$ | $d_2$ | $d_1$ | $d_0$ |
|---|---|---|---|---|---|
| 0 | 0 | 0 | 0 | 0 | 0 |
| 0 | 1 | 1 | 0 | 0 | 1 |
| 1 | 0 | 1 | 0 | 1 | 0 |
| 1 | 1 | 0 | 0 | 1 | 1 |
| 1 | 1 | 0 | 1 | 0 | 0 |
| 1 | 0 | 1 | 1 | 0 | 1 |
| 0 | 1 | 1 | 1 | 1 | 0 |
| 0 | 0 | 0 | 1 | 1 | 1 |
| Prüfwort | | | Datenwort | | |

*Tabelle 1*

**Syndromtabelle:**

| $F = 011 \Rightarrow$ | $d_0$ fehlerhaft |
|---|---|
| $F = 101 \Rightarrow$ | $d_1$ fehlerhaft |
| $F = 110 \Rightarrow$ | $d_2$ fehlerhaft |

*Tabelle 2*

| $p_{ges}$ | $p_2$ | $p_1$ | $p_0$ | $d_2$ | $d_1$ | $d_0$ |
|---|---|---|---|---|---|---|
| 0 | 0 | 0 | 0 | 0 | 0 | 0 |
| 1 | 0 | 1 | 1 | 0 | 0 | 1 |
| 1 | 1 | 0 | 1 | 0 | 1 | 0 |
| 0 | 1 | 1 | 0 | 0 | 1 | 1 |
| 1 | 1 | 1 | 0 | 1 | 0 | 0 |
| 0 | 1 | 0 | 1 | 1 | 0 | 1 |
| 0 | 0 | 1 | 1 | 1 | 1 | 0 |
| 1 | 0 | 0 | 0 | 1 | 1 | 1 |
| Par. | Prüfwort | | | Datenwort | | |

*Tabelle 3*

FIG. 2b

FIG. 2a

FIG.1a

FIG.3

FIG.1b

EP 1 003 186 B1